# EUROPÄISCHE PATENTSCHRIFT

(11) **EP 2 285 519 B1**
(45) Veröffentlichungstag und Bekanntmachung des Hinweises auf die Patenterteilung: **22.02.2017**
(21) Anmeldenummer: 09741933.7
(22) Anmeldetag: 09.03.2009
(51) Int. Cl.: B23D 59/00, B27G 19/02

(54) **WERKZEUGMASCHINE, INSBESONDERE TISCHKREISSÄGE**
MACHINE TOOL, ESPECIALLY CIRCULAR SAW BENCH
MACHINE-OUTIL, NOTAMMENT SCIE CIRCULAIRE DE TABLE

(30) Priorität: 07.05.2008 DE 102008001633
(43) Veröffentlichungstag der Anmeldung: 23.02.2011
(73) Patentinhaber: Robert Bosch GmbH, 70442 Stuttgart (DE)
(72) Erfinder: FUCHS, Rudolf, 73765 Neuhausen (DE)
(86) Internationale Anmeldenummer: PCT/EP2009/052713
(87) Internationale Veröffentlichungsnummer: WO 2009/135715

(56) Entgegenhaltungen:
- EP-A- 1 712 318
- DE-A1- 10 159 292
- DE-U1-202005 007 680
- US-A1- 2005 098 012
- US-A1- 2006 042 444

## Beschreibung

Die Erfindung bezieht sich auf eine Werkzeugmaschine, insbesondere eine Tischkreissäge, mit einem Schnittwerkzeug.

### Stand der Technik

Tischkreissägen weisen üblicherweise eine Sägeblattabdeckung auf, die die Funktion einer Schutzhaube übernimmt, welche auf Grund ihrer exponierten Lage jedoch erheblichen mechanischen Einflüssen ausgesetzt ist, was dazu führen kann, dass die Schutzhaube aus ihrer in Bezug auf das Sägeblatt ausgerichteten Position ausgelenkt wird. Wird eine optische Schnittlinienanzeigeeinrichtung an der Schutzhaube befestigt, beispielsweise ein Linienlaser, der einen Lichtstrahl auf das Werkstück wirft und dadurch die Sägelinie vorgibt, hat die Auslenkung der Schutzhaube aus ihrer optimalen Lage auch eine entsprechende Winkelabweichung des Lichtstrahls zur Folge. Dieser bietet dann keine verlässliche Anzeige mehr.

Aus der US 2005/098012 A1 ist eine Tischkreissäge zum Sägen von Kacheln bekannt, wobei die Tischkreissäge eine Laser-Schnittlinienanzeigevorrichtung aufweist, die die Schnittrichtung des Schnittwerkzeugs der Tischkreissäge anzeigt. Die Position der Schnittlinienanzeigevorrichtung ist über eine Stellschraube gegenüber dem Gehäuse der Tischkreissäge einstellbar. Für eine genaue Ausrichtung der Schnittlinienanzeigevorrichtung der Schnittebene des Sägeblatts ist eine präzise manuelle Einstellung über die Stellschraube erforderlich.

### Offenbarung der Erfindung

Der Erfindung liegt die Aufgabe zu Grunde, eine Werkzeugmaschine wie z.B. eine Tischkreissäge mit einfachen Maßnahmen so auszubilden, dass die Schnittlinie des Schnittwerkzeugs in korrekter Weise in Schnittrichtung ausgerichtet ist. Die Justierung der Anzeige der Schnittlinie soll selbsttätig erfolgen.

Diese Aufgabe wird erfindungsgemäß mit den Merkmalen des Anspruches 1 gelöst. Die Unteransprüche geben zweckmäßige Weiterbildungen an.

Bei der erfindungsgemäßen Werkzeugmaschine handelt es sich insbesondere um eine stationäre oder semistationäre Werkzeugmaschine, beispielsweise eine Tischkreissäge, die mit einem Schnittwerkzeug versehen ist, welches bevorzugt von einer Schutzhaube überdeckt ist. Die Schutzhaube ist mithilfe einer Halterung an der Werkzeugmaschine, beispielsweise am Gehäuse der Werkzeugmaschine befestigt.

Erfindungsgemäß ist vorgesehen, dass eine Schnittlinienanzeigevorrichtung an einem Bauteil der Werkzeugmaschine angeordnet ist, die die Schnittrichtung des Schnittwerkzeugs anzeigt und die eine Relativbewegung gegenüber dem Schnittwerkzeug ausführen kann. Die Position der Schnittlinienanzeigevorrichtung ist über eine Justiereinrichtung gegenüber dem Schnittwerkzeug einzustellen. Bevorzugt erfolgt dies in der Weise, dass die Schnittlinienanzeigevorrichtung an der Schutzhaube angeordnet und die Schutzhaube über die Justiereinrichtung gegenüber dem Schnittwerkzeug zu verstellen ist. Die Schutzhaube als Träger der Schnittlinienanzeigevorrichtung kann eine Relativbewegung gegenüber dem Schnittwerkzeug ausführen, die auch eine Bewegung quer zur Schnittebene des Schnittwerkzeugs umfassen kann.

Üblicherweise ermöglicht die Halterung der Schutzhaube eine Relativbewegung, insbesondere eine Querbewegung bezogen auf die Schnittebene bzw. die Schnittrichtung des Schnittwerkzeugs, wobei zusätzlich oder alternativ auch die Verformbarkeit der Schutzhaube eine derartige Relativ- und ggf. Querbewegung ermöglichen kann. Für die genaue Positionierung der Schutzhaube ist die Justiereinrichtung vorgesehen, die unter Ausnutzung des Bewegungsfreiheitsgrades der Schutzhaube für die exakte Positionierung in der Mittellage sorgt. Die Justiereinrichtung ist gemäß einer vorteilhaften Ausführung manuell zu betätigen, wobei es grundsätzlich auch möglich ist, beispielsweise mithilfe eines Federelementes eine selbsttätige Justierung durchzuführen. Gegebenenfalls wird auch eine Kombination von manueller Einstellung und selbsttätiger Justierung durchgeführt, beispielsweise dergestalt, dass die Grobjustierung manuell durchgeführt wird und die Feinjustierung mithilfe des Federelementes.

Die Relativbewegung der Schnittlinienanzeigevorrichtung, insbesondere der Schutzhaube gegenüber dem Schnittwerkzeug, die über die Justiereinrichtung korrigiert werden kann, kann prinzipiell sämtliche räumliche Freiheitsgrade mit drei translatorischen und drei rotatorischen Bewegungsmöglichkeiten umfassen. In der Praxis besonders relevant sind die Querbewegung sowie ggf. auch eine Schwenkbewegung um eine Hochachse im Bereich der Halterung der Schutzhaube.

Gemäß einer erfindungsgemäßen Ausführung, die zur Präzision der Ausrichtung beiträgt, liegt an mindestens einer Flanke des Schnittwerkzeugs ein reibungsarmes Führungselement an, das die Schutzhaube in der gewünschten Mittellage zur Schnittebene des Schnittwerkzeugs hält. Das Führungselement ist mit einer reibungsarmen Beschichtung versehen oder besteht aus reibungsarmem Material, so dass der Kontakt zwischen dem Führungselement und der Flanke des Schnittwerkzeugs zu keiner signifikanten Beeinträchtigung der Schnittleistung oder zu einem erhöhten Verschleiß des Führungselementes führt. Zugleich wird aber eine Justierung und Stabilisierung der Schutzhaube in Querrichtung erreicht.

Gemäß einer weiteren bevorzugten Ausführung sind insgesamt zwei Führungselemente vorgesehen, die an gegenüberliegenden Flanken des Schnittwerkzeugs anliegen, so dass dieses in beide Richtungen von den Führungselementen beaufschlagt wird. Entsprechend wird auch die Schutzhaube in beide Richtungen quer zur Schnittwerkzeugebene in der gewünschten Mittellage gehalten. Ist der Justiereinrichtung ein Federelement zugeordnet, das ein Bauteil der Justiereinrichtung in Richtung auf eine an die Flanken des Schnittwerkzeuges anliegende Position kraftbeaufschlagt, kann sichergestellt werden, dass das reibungsarme Führungselement, welches Bestandteil der Justiereinrichtung ist, durch die Kraft des Federelementes immer an die Flanke des Schnittwerkzeugs gedrückt wird. Sind zwei Führungselemente an den gegenüberliegenden Flanken des Schnittwerkzeugs vorgesehen, so werden zweckmäßigerweise beide Führungselemente durch Federkraft an die Flanken gedrückt. Hierbei kann es vorteilhaft sein, ein gemeinsames Federelement für beide Führungselemente vorzusehen.

Gemäß einer weiteren vorteilhaften Ausführung weist die Justiereinrichtung mindestens einen gelenkig gelagerten Justierhebel auf, der das Schnittwerkzeug in Querrichtung beaufschlagt. An dem Justierhebel ist zweckmäßigerweise das Führungselement gehalten, welches in unmittelbarem Kontakt mit der Flanke des Schnittwerkzeugs liegt. Werden gemäß einer weiteren vorteilhaften Ausführung insgesamt zwei gelenkig gelagerte Justierhebel angeordnet, so können diese nach Scherenprinzip eine gemeinsame Gelenkachse aufweisen und an den gegenüberliegenden Flanken des Schnittwerkzeugs zur Anlage gelangen. Die beiden Justierhebel werden zweckmäßigerweise von einem gemeinsamen Federelement in Richtung auf die Flanken des Schnittwerkzeugs kraftbeaufschlagt. Des Weiteren kann den beiden Justierhebeln eine gemeinsame Justiereinrichtung zugeordnet sein, die beispielsweise ein Verstellglied umfasst, welches beweglich an der Schutzhaube gehalten ist. Dieses Verstellglied, das vorzugsweise translatorisch gegenüber der Schutzhaube zu verstellen ist, liegt in Kontakt mit mindestens einem Justierhebel und beaufschlagt diesen entgegen der Kraft des Federelementes. Vorzugsweise dient das Verstellglied zur gemeinsamen Verstellung beider Justierhebel. Bei dem Verstellglied handelt es sich beispielsweise um einen Verstellbolzen, der z.B. von einer Verstellschraube verschoben werden kann, die an der Schutzhaube angeordnet ist und von der Außenseite der Schutzhaube aus zu bedienen ist.

An der Schutzhaube ist eine Schnittlinienanzeigevorrichtung angeordnet, beispielsweise ein Linienlaser, der einen Lichtstrahl auf das zu bearbeitende Werkstück wirft und dadurch die Sägelinie vorgibt. Durch die gewünschte Ausrichtung der Schutzhaube auf die Schnittrichtung des Schnittwerkzeugs mithilfe der Justiereinrichtung ist gewährleistet, dass der Lichtstrahl der Schnittlinienanzeigevorrichtung genau in der Richtung der Schnittebene liegt.

Weitere Vorteile und zweckmäßige Ausführungen sind den weiteren Ansprüchen, der Figurenbeschreibung und den Zeichnungen zu entnehmen. Es zeigen:
Fig. 1 eine Seitenansicht auf eine Tischkreissäge mit einem Sägeblatt, das von einer Schutzhaube übergriffen ist, die mithilfe einer Halterung an der Tischkreissäge befestigt ist, wobei der Schutzhaube zusätzlich eine Justiereinrichtung zugeordnet ist, über die die Position der Schutzhaube in Querrichtung einzustellen ist,
Fig. 2 die Tischkreissäge im Schnitt.

In den Figuren sind gleiche Bauteile mit gleichen Bezugszeichen versehen.

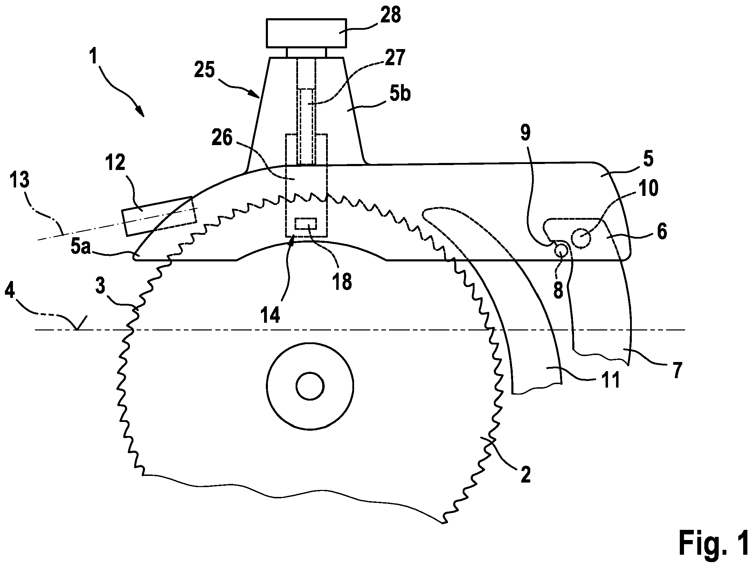

Bei der in Fig. 1 dargestellten Werkzeugmaschine handelt es sich um eine stationäre bzw. semistationäre Tischkreissäge 1 mit einem elektrisch angetriebenen, rotierenden Sägeblatt 2, welches auf der Umfangsseite mit Sägezähnen 3 versehen ist. Das Sägeblatt 2 ist an einem Sägetisch drehbar gelagert, die zu bearbeitenden Werkstücke werden dem Sägeblatt 2 auf der Tischoberseite 4 des Sägetisches zugeführt, über die ein Segment des Sägeblattes 2 herausragt. Ein über die Tischoberseite 4 überstehender Abschnitt des Sägeblattes 2 ist von einer Schutzhaube 5 übergriffen, die über eine Halterung 6 an der Tischkreissäge 1, insbesondere am Sägetisch gehalten ist und deren Unterseite mit Abstand zur Tischoberseite 4 liegt. Die Halterung 6 besteht aus einem Halterungsteil 7, welches über ein Befestigungselement 10 mit der Schutzhaube 5 verbunden ist und diese an der Tischkreissäge 1 fixiert. Das Befestigungselement 10 ist beispielsweise ein Gelenkzapfen oder dergleichen.

Um sicherzustellen, dass nur Werkstücke von begrenzter Höhe dem Sägeblatt 2 zugeführt werden können, weist die Schutzhaube 5 eine Höhenbegrenzung für den Abstand zwischen der Tischoberseite 4 und der Unterseite der Schutzhaube 5 auf. Diese Begrenzung besteht aus einem Anschlagsstift 8, der benachbart zu dem Halterungsteil 7 in die Schutzhaube 5 eingebracht ist und mit einer Anschlagsfläche 9 an dem Halterungsteil 7 zusammenwirkt. Falls über die Tischoberseite 4 ein Werkstück von zu großer Höhe herangeführt wird, schlägt dieses an der Vorderseite 5a der Schutzhaube 5 an, woraufhin die Schutzhaube 5 versucht, eine Aufschwenkbewegung um das beispielsweise als Gelenkzapfen ausgebildete Befestigungselement 10 durchzuführen. Diese Aufschwenkbewegung wird aber durch den Anschlag des Anschlagstiftes 8 an der Anschlagsfläche 9 begrenzt. Auf diese Weise ist sichergestellt, dass nur Werkstücke mit einer definierten Maximalhöhe über die Tischoberseite 4 dem Sägeblatt 2 zur Bearbeitung herangeführt werden können.

Im hinteren Bereich der Tischkreissäge 1 befindet sich zwischen der Umfangsseite des Sägeblattes 2 und dem Halterungsteil 7 ein Spaltkeil 11, der bevorzugt an der Tischkreissäge 1 gehalten ist.

An der Schutzhaube 5 ist benachbart zur Vorderseite 5a eine Schnittlinienanzeigevorrichtung 12 angeordnet, die einen Lichtstrahl 13 entlang der Schnittebene bzw. Mittelebene des Sägeblattes 2 auf die Tischoberseite 4 in den Bereich des Abschnittes projiziert, über den das zu bearbeitende Werkstück an das Sägeblatt 2 herangeführt wird. Der Lichtstrahl 13 ist insbesondere als Laserstrahl ausgeführt und markiert die Schnitt- bzw. Sägerichtung auf dem Werkstück.

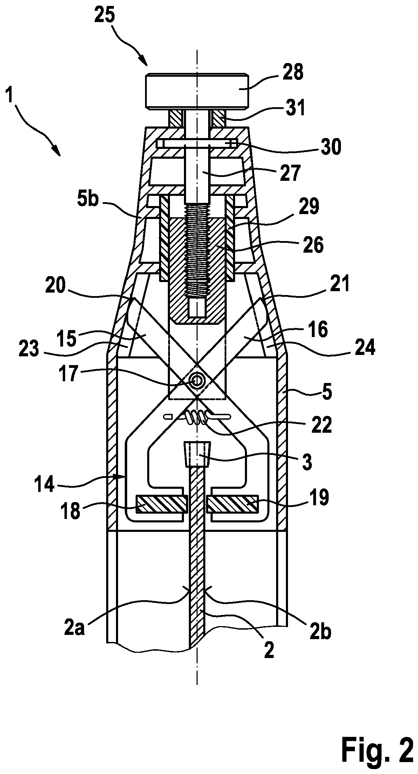

Wie Fig. 1 sowie im Detail Fig. 2 zu entnehmen, ist die Schutzhaube 5 mit einer Justiereinrichtung 14 versehen, über die die Position der Schutzhaube quer zur Schnittebene des Sägeblattes 2 einstellbar ist. Quer zur Schnittebene bedeutet in diesem Fall in Richtung der bzw. parallel zur Drehachse des Sägeblattes 2. Die Bewegung in Querrichtung der Schutzhaube 5 wird im Wesentlichen durch Elastizitäten im Bereich der Halterung 6 ermöglicht, über die die Schutzhaube 5 an der Tischkreissäge 1 befestigt ist. Da die Halterung 6 sich im hinteren Bereich der Schutzhaube 5 befindet, können Auslenkungen der Schutzhaube 5 im Bereich der Vorderseite 5a in Querrichtung auf Grund der Elastizitäten im Bereich der Lagerung mit dem Befestigungselement 10 bzw. auf Grund von Werkstoffelastizitäten in der Schutzhaube 5 bis zu einem gewissen Grade durchgeführt werden. Hierbei besteht die Gefahr, dass während der Bearbeitung eines Werkstückes durch äußere, auf die Schutzhaube einwirkende Kräfte diese in Querrichtung verstellt wird, so dass keine mittige Ausrichtung der Schutzhaube 5 auf das Sägeblatt 2 mehr gewährleistet ist. Diese mittige Ausrichtung ist aber Voraussetzung dafür, dass die Schnittlinienanzeigevorrichtung 12 einen Lichtstrahl 13 erzeugt, der in der Schnittebene des Sägeblattes 2 liegt.

Mithilfe der Justiereinrichtung 14 kann eine dauerhafte mittige Justierung der Schutzhaube 5 bezogen auf das Sägeblatt 2 sichergestellt werden. Die Justiereinrichtung 14 arbeitet hierbei insbesondere selbsttätig, wobei zusätzlich eine manuelle Einstellung an der Werkzeugmaschine vorhanden ist.

Wie im Detail Fig. 2 zu entnehmen, besteht die Justiereinrichtung 14 aus zwei innerhalb der Schutzhaube 5 gelenkig gelagerten Justierhebeln 15 und 16, die an einem gemeinsamen Lagerbolzen 17 drehbar gelagert sind. Der Lagerbolzen 17 befindet sich an einem Bauteil der Tischkreissäge, so dass bei einer Betätigung der Justierhebel 15 und 16 die Schutzhaube 5 ihre Position relativ zu dem Sägetisch der Tischkreissäge und damit auch zum Sägeblatt ändert.

Jeder Justierhebel 15, 16 trägt an der dem Sägeblatt 2 zugewandten Stirnseite ein Führungselement 18 bzw. 19, das aus reibungsarmem Material besteht bzw. mit einer reibungsarmen Oberfläche beschichtet ist und unmittelbar an der Sägeblattflanke 2a bzw. 2b des Sägeblattes 2 anliegt. Die beiden Justierhebel 15 und 16 werden über die Kraft eines Federelementes 22, das als Zugfeder ausgebildet ist und mit Abstand zum Lagerbolzen 17 an den Justierhebeln angreift, in die Kontaktposition kraftbeaufschlagt, in der die beiden Führungselemente 18 und 19 an den Sägeblattflanken 2a und 2b anliegen.

An der gegenüberliegenden Stirnseite besitzen die Justierhebel 15 und 16 abgeschrägte Stirnflächen 20 bzw. 21, die jeweils an der Innenwand der Schutzhaube 5 anliegen. Über zusätzliche Führungsstege 23 und 24 an der Innenseite der Schutzhaube 5 ist sichergestellt, dass die Justierarme 15 und 16 sich nicht versehentlich verdrehen. Die abgeschrägten Stirnflächen 20 und 21 an den Stirnseiten der Justierhebel 15 und 16 korrespondieren mit abgeschrägten Wandungen an der Schutzhaube 5, so dass ein flächiger Kontakt an den Stirnflächen 20 bzw. 21 und der Innenseite der Schutzhaube gewährleistet ist. Die Dimensionierungen sind in der Weise gewählt, dass die Justierhebel 15 und 16 über ihre Stirnflächen 20 und 21 an der Innenwand der Schutzhaube 5 so abgestützt sind, dass die Führungselemente 18 und 19 zwar in Kontakt mit den Sägeblattflanken 2a bzw. 2b liegen, jedoch nur einen sehr geringen bzw. keinen Druck auf das Sägeblatt 2 ausüben. Die Justiereinrichtung befindet sich im Kräftegleichgewicht, indem die Kraft des Federelements 22 zum einen über die Führungselemente 18 und 19 am Sägeblatt 2 und zum anderen über die Stirnflächen 20 und 21 an der Innenwand der Schutzhaube aufgenommen wird.

Die Justiereinrichtung 14 funktioniert selbsttätig. Über die Kraft des Federelementes 22 wird eine automatische symmetrische Ausrichtung der Schutzhaube 5 bezogen auf die Mittel- bzw. Schnittebene des Schnittblattes 2 erreicht.

Des Weiteren ist eine Verstelleinrichtung 25 vorgesehen, die mit der Justiereinrichtung 14 zusammenwirkt und für eine Grobjustierung der Schutzhaube 5 bezogen auf das Sägeblatt 2 dient. Die Verstelleinrichtung 25 ist in einem oberen Schutzhaubenteil 5b der Schutzhaube 5 ausgebildet und umfasst eine Verstellbuchse 26 als zentrales Verstellglied, die axial in Richtung auf die beiden Justierhebel 15 und 16 zu bewegt werden kann. Die Verstellrichtung der Verstellbuchse 26 erfolgt auf den Lagerbolzen 17 zu und fällt mit der Ebene des Sägeblattes 2 zusammen.

Sobald die Verstellbuchse 26 in Kontakt mit den beiden Justierhebeln 15 und 16 mit Abstand zum Lagerbolzen 17 gelangt, werden die oberen Abschnitte der Justierhebel 15 und 16 nach außen gedrückt, woraufhin sich die beiden Führungselemente 18 und 19 an den gegenüberliegenden Abschnitten gegen die Kraft des Federelementes 22 von den Sägeblattflanken 2a und 2b entfernen. Zugleich rutscht die Schutzhaube 5 auf Grund des größeren Querabstandes zwischen den Stirnflächen 20 und 21 und der schräggestellten Innenwandung der Schutzhaube, die sich nach oben verjüngt, geringfügig nach oben.

Bei einer Bewegung der Verstellbuchse 26 in Gegenrichtung, also von den beiden Justierhebeln 15 und 16 fort, können diese unter der Wirkung des Federelementes 22 wieder in eine Position verstellt werden, in der die beiden Führungselemente 18 und 19 in unmittelbarem Kontakt zu den Sägeblattflanken 2a und 2b liegen.

Die Verstellung der Verstellbuchse 26 erfolgt mithilfe einer spindelförmigen Verstellschraube 27, die mit einem von außen betätigbaren Einstellknopf 28 versehen ist und ohne axiale Verstellung über einen Bund 30 drehbar an der Schutzhaube 5 gelagert ist. Die Verstellschraube 27 weist ein Außengewinde auf, das mit einem entsprechenden Innengewinde in der Verstellbuchse 26 kämmt. Die Verstellbuchse 26 ist ohne Verdrehmöglichkeit in einem Gleitlager 29 axial verschiebbar gelagert, so dass jede Drehbewegung der Verstellschraube 27 zu einer axialen Verschiebung der Verstellbuchse 26 führt. Zwischen dem Einstellknopf 28 und der Oberseite des oberen Schutzhaubenteils 5b befindet sich eine Distanzhülse 31.

## Patentansprüche

1. Werkzeugmaschine, insbesondere Tischkreissäge, mit einem Schnittwerkzeug (2), mit einer Schnittlinienanzeigevorrichtung (12) an der Werkzeugmaschine, die die Schnittrichtung des Schnittwerkzeugs (2) anzeigt und die eine Relativbewegung gegenüber dem Schnittwerkzeug (2) ausführen kann, wobei die Position der Schnittlinienanzeigevorrichtung (12) über eine Justiereinrichtung (14) gegenüber dem Schnittwerkzeug (2) einstellbar ist,
**dadurch gekennzeichnet, dass** an mindestens einer Flanke (2a, 2b) des Schnittwerkzeugs (2) ein reibungsarmes Führungselement (18, 19) anliegt, um die Schnittlinienanzeigevorrichtung (12) in einer Mittellage zur Schnittebene des Schnittwerkzeugs (2) zu halten.

2. Werkzeugmaschine nach Anspruch 1,
**dadurch gekennzeichnet, dass** die Schnittlinienanzeigevorrichtung (12) an einer das Schnittwerkzeug (2) überdeckenden Schutzhaube (5) angeordnet ist und dass die Schutzhaube (5) über die Justiereinrichtung (14) gegenüber dem Schnittwerkzeug (2) verstellbar ist.

3. Werkzeugmaschine nach Anspruch 1 oder 2,
**dadurch gekennzeichnet, dass** die Relativbewegung der Schnittlinienanzeigevorrichtung (12) quer zur Schnittebene des Schnittwerkzeugs (2) erfolgt, wobei über die Justiereinrichtung (14) die Position der Schnittlinienanzeigevorrichtung (12) quer zur Schnittebene des Schnittwerkzeugs (2) einstellbar ist.

4. Werkzeugmaschine nach einem der Ansprüche 1 bis 3,
**dadurch gekennzeichnet, dass** das Führungselement (18, 19) an der Justiereinrichtung (14) gehalten ist.

5. Werkzeugmaschine nach einem der Ansprüche 1 bis 4,
**dadurch gekennzeichnet, dass** der Justiereinrichtung (14) ein Federelement (22) zugeordnet ist, das ein Bauteil (15, 16) der Justiereinrichtung (14) in Richtung auf eine an die Flanken (2a, 2b) des Schnittwerkzeugs (2) anliegende Position beaufschlagt.

6. Werkzeugmaschine nach einem der Ansprüche 1 bis 5,
**dadurch gekennzeichnet, dass** die Justiereinrichtung (14) mindestens einen gelenkig gelagerten Justierhebel (15, 16) umfasst, der das Schnittwerkzeug (2) in Querrichtung beaufschlagt.

7. Werkzeugmaschine nach Anspruch 6,
**dadurch gekennzeichnet, dass** die Justiereinrichtung (14) zwei gelenkig gelagerte Justierhebel (15, 16) umfasst, die das Schnittwerkzeug (2) in entgegengesetzte Richtungen beaufschlagen.

8. Werkzeugmaschine nach Anspruch 7,
**dadurch gekennzeichnet, dass** die beiden Justierhebel (15, 16) eine gemeinsame Gelenkachse aufweisen.

9. Werkzeugmaschine nach Anspruch 7 oder 8,
**dadurch gekennzeichnet, dass** die beiden Justierhebel (15, 16) von einem gemeinsamen Federelement (22) in Richtung auf eine an die Flanken (2a, 2b) des Schnittwerkzeugs (2) anliegende Position kraftbeaufschlagt sind.

10. Werkzeugmaschine nach einem der Ansprüche 6 bis 9,
**dadurch gekennzeichnet, dass** ein dem Schnittwerkzeug (2) abgewandter Abschnitt des Justierhebels (15, 16) an der Schutzhaube (5) abgestützt ist.

11. Werkzeugmaschine nach einem der Ansprüche 6 bis 10,
**dadurch gekennzeichnet, dass** die Winkellage des Justierhebels (15, 16) über eine an der Schutzhaube (5) angeordnete Verstelleinrichtung (25) einzustellen ist.

12. Werkzeugmaschine nach Anspruch 11,
**dadurch gekennzeichnet, dass** die Verstelleinrichtung (25) ein an der Schutzhaube (5) beweglich gehaltenen Verstellglied (26) umfasst, das in Kontakt mit dem Justierhebel (15, 16) liegt.

13. Werkzeugmaschine nach Anspruch 12,
**dadurch gekennzeichnet, dass** das Verstellglied (26) translatorisch an der Schutzhaube (5) zu verstellen ist und von einer Verstellschraube (27) translatorisch zu verschieben ist.

14. Werkzeugmaschine nach Anspruch 4 und einem der Ansprüche 7 bis 13,
**dadurch gekennzeichnet, dass** das Führungselement (18, 19) an einer Stirnseite des Justierhebels (15, 16) gehalten ist.

## Claims

1. Machine tool, especially circular saw bench, with a cutting tool (2), with a cutting-line-indicating device (12) on the machine tool, which cutting-line-indicating device indicates the cutting direction of the cutting tool (2) and which can carry out a relative movement in relation to the cutting tool (2), wherein the position of the cutting-line-indicating device (12) is adjustable in relation to the cutting tool (2) via an adjustment device (14), **characterized in that** a low-friction guide element (18, 19) lies against at least one flank (2a, 2b) of the cutting tool (2) in order to hold the cutting-line-indicating device (12) in a central position with respect to the cutting plane of the cutting tool (2).

2. Machine tool according to Claim 1, **characterized in that** the cutting-line-indicating device (12) is arranged on a protective hood (5) covering the cutting tool (2), and **in that** the protective hood (5) is shiftable in relation to the cutting tool (2) via the adjustment device (14).

3. Machine tool according to Claim 1 or 2, **characterized in that** the relative movement of the cutting-line-indicating device (12) takes place transversely with respect to the cutting plane of the cutting tool (2), wherein the position of the cutting-line-indicating device (12) is adjustable transversely with respect to the cutting plane of the cutting tool (2) via the adjustment device (14).

4. Machine tool according to one of Claims 1 to 3, **characterized in that** the guide element (18, 19) is held on the adjustment device (14).

5. Machine tool according to one of Claims 1 to 4, **characterized in that** the adjustment device (14) is assigned a spring element (22) which acts upon a component (15, 16) of the adjustment device (14) in the direction of a position lying against the flanks (2a, 2b) of the cutting tool (2).

6. Machine tool according to one of Claims 1 to 5, **characterized in that** the adjustment device (14) comprises at least one adjustment lever (15, 16) which is mounted in an articulated manner and acts upon the cutting tool (2) in the transverse direction.

7. Machine tool according to Claim 6, **characterized in that** the adjustment device (14) comprises two adjustment levers (15, 16) which are mounted in an articulated manner and act upon the cutting tool (2) in opposite directions.

8. Machine tool according to Claim 7, **characterized in that** the two adjustment levers (15, 16) have a common axis of articulation.

9. Machine tool according to Claim 7 or 8, **characterized in that** the two adjustment levers (15, 16) are acted upon with force by a common spring element (22) in the direction of a position lying against the flanks (2a, 2b) of the cutting tool (2).

10. Machine tool according to one of Claims 6 to 9, **characterized in that** a portion of the adjustment lever (15, 16) that faces away from the cutting tool (2) is supported on the protective hood (5).

11. Machine tool according to one of Claims 6 to 10, **characterized in that** the angular position of the adjustment lever (15, 16) can be adjusted via a shifting device (25) arranged on the protective hood (5).

12. Machine tool according to Claim 11, **characterized in that** the shifting device (25) comprises a shifting member (26) which is held in a movable manner on the protective hood (5) and is in contact with the adjustment lever (15, 16).

13. Machine tool according to Claim 12, **characterized in that** the shifting member (26) can be shifted in a translatory manner on the protective hood (5) and can be displaced in a translatory manner by a shifting screw (27).

14. Machine tool according to Claim 4 and one of Claims 7 to 13, **characterized in that** the guide element (18, 19) is held on an end side of the adjustment lever (15, 16).

## Revendications

1. Machine-outil, en particulier scie circulaire de table, comprenant un outil de coupe (2) avec un dispositif d'indication de la ligne de coupe (12) sur la machine-outil, qui indique la direction de coupe de l'outil de coupe (2) et qui peut effectuer un mouvement relatif par rapport à l'outil de coupe (2), la position du dispositif d'indication de la ligne de coupe (12) pouvant être ajustée par le biais d'un dispositif d'ajustement (14) par rapport à l'outil de coupe (2),
**caractérisée en ce qu'**un élément de guidage (18, 19) à faible friction s'applique contre au moins un flanc (2a, 2b) de l'outil de coupe (2) afin de maintenir le dispositif d'indication de la ligne de coupe (12) dans une position centrale par rapport au plan de coupe de l'outil de coupe (2).

2. Machine-outil selon la revendication 1,
**caractérisée en ce que** le dispositif d'indication de la ligne de coupe (12) est disposé au niveau d'un capot de protection (5) recouvrant l'outil de coupe (2) et **en ce que** le capot de protection (5) peut être ajusté par le biais du dispositif d'ajustement (14) par rapport à l'outil de coupe (2).

3. Machine-outil selon la revendication 1 ou 2,
**caractérisée en ce que** le mouvement relatif du dispositif d'indication de la ligne de coupe (12) s'effectue transversalement au plan de coupe de l'outil de coupe (2), la position du dispositif d'indication de la ligne de coupe (12) pouvant être ajustée par le biais du dispositif d'ajustement (14) transversalement au plan de coupe de l'outil de coupe (2).

4. Machine-outil selon l'une quelconque des revendications 1 à 3,
**caractérisée en ce que** l'élément de guidage (18, 19) est maintenu contre le dispositif d'ajustement (14).

5. Machine-outil selon l'une quelconque des revendications 1 à 4,
**caractérisée en ce que** le dispositif d'ajustement (14) est associé à un élément de ressort (22) qui sollicite un composant (15, 16) du dispositif d'ajustement (14) dans la direction d'une position l'appliquant contre les flancs (2a, 2b) de l'outil de coupe (2).

6. Machine-outil selon l'une quelconque des revendications 1 à 5,
**caractérisée en ce que** le dispositif d'ajustement (14) comprend au moins un levier d'ajustement (15, 16) supporté de manière articulée, qui sollicite l'outil de coupe (2) dans la direction transversale.

7. Machine-outil selon la revendication 6,
**caractérisée en ce que** le dispositif d'ajustement (14) comprend deux leviers d'ajustement (15, 16) supportés de manière articulée, qui sollicitent l'outil de coupe (2) dans des directions opposées.

8. Machine-outil selon la revendication 7,
**caractérisée en ce que** les deux leviers d'ajustement (15, 16) présentent un axe d'articulation commun.

9. Machine-outil selon la revendication 7 ou 8,
**caractérisée en ce que** les deux leviers d'ajustement (15, 16) sont sollicités par force par un élément de ressort commun (22) dans la direction d'une position les appliquant contre les flancs (2a, 2b) de l'outil de coupe (2).

10. Machine-outil selon l'une quelconque des revendications 6 à 9,
**caractérisée en ce qu'**une portion du levier d'ajustement (15, 16) opposée à l'outil de coupe (2) est supportée contre le capot de protection (5).

11. Machine-outil selon l'une quelconque des revendications 6 à 10,
**caractérisée en ce que** la position angulaire du levier d'ajustement (15, 16) doit être ajustée par le biais d'un dispositif de réglage (25) disposé au niveau du capot de protection (5).

12. Machine-outil selon la revendication 11,
**caractérisée en ce que** le dispositif de réglage (25) comprend un organe de réglage (26) retenu de manière mobile sur le capot de protection (5), qui est en contact avec le levier d'ajustement (15, 16).

13. Machine-outil selon la revendication 12,
**caractérisée en ce que** l'organe de réglage (26) doit être déplacé en translation contre le capot de protection (5) et doit être coulissé en translation par une vis de réglage (27).

14. Machine-outil selon la revendication 4 selon l'une quelconque des revendications 7 à 13,
**caractérisée en ce que** l'élément de guidage (18, 19) est retenu au niveau d'un côté frontal du levier d'ajustement (15, 16).
